**Europäisches Patentamt**

**European Patent Office**

**Office européen des brevets**

(11) Veröffentlichungsnummer: **0 003 378**
**B2**

(12) **NEUE EUROPÄISCHE PATENTSCHRIFT**

(45) Veröffentlichungstag der neuen Patentschrift:
**11.06.86**

(51) Int. Cl.⁴: **C 09 F 1/04**, C 09 D 11/08,
C 08 F 8/00

(21) Anmeldenummer: **79200029.1**

(22) Anmeldetag: **17.01.79**

(54) Verfahren zur Herstellung von teilveresterten und teilversalzten Umsetzungsprodukten von Naturharzsäuren und Dicarbonsäureeinheiten und deren Verwendung in Druckfarben.

(30) Priorität: **23.01.78 DE 2802702**

(43) Veröffentlichungstag der Anmeldung:
**08.08.79 Patentblatt 79/16**

(45) Bekanntmachung des Hinweises auf die Patenterteilung:
**18.11.81 Patentblatt 81/46**

(45) Bekanntmachung des Hinweises auf die Entscheidung
über den Einspruch:
**11.06.86 Patentblatt 86/24**

(84) Benannte Vertragsstaaten:
**BE DE FR GB IT NL**

(56) Entgegenhaltun͏ ͏:
**DE - A - 2 150 21**
**DE - A - 2 556 18**
**FR - A - 2 161 908**
**US - A - 2 380 192**

**W. Sundermann, Naturharze, Terpentinöl, Tallöl,**
**Springer, Berlin 1960, S.209-210**
**R. Lombard, Produits résineux, Dunod Paris 1946, page**
**275**

Die Akte enthält technische Angaben, die nach dem
Eingang der Anmeldung eingereicht wurden und die
nicht in dieser Patentschrift enthalten sind.

(73) Patentinhaber: **HOECHST AKTIENGESELLSCHAFT,**
**Postfach 80 03 20, D-6230 Frankfurt am Main 80 (DE)**

(72) Erfinder: **Rudolphy, Albert, Wilhelm-Kalle-Strasse 20,**
**D-6200 Wiesbaden-Biebrich (DE)**

LIBER. STOCKHOLM 1986

**Beschreibung**

Die Erfindung betrifft ein Verfahren zur Herstellung von teilveresterten und teilversalzten Umsetzungsprodukten von Naturharzsäuren und ungesättigten Dicarbonsäureeinheiten.

Aus der britischen Patentschrift 1 230 240 ist es bekannt, Naturharzsäuren mit Phenolharzen oder Maleinatharzen zu modifizieren und diese modifizierten Produkte oder auch Calcium- bzw. Zinkresinate für Druckfarben zu verwenden. Ausserdem beschreibt diese Druckschrift die Herstellung von Druckfarbenbindemitteln durch Umsetzung von Naturharzsäuren mit Phenol-Formaldehyd-Kondensationsprodukten in Gegenwart von Metallsalz-Katalysatoren, wie Zink- oder Calciumsalzen oder dergleichen, und die Veresterung dieser Produkte mit mehrwertigen Alkoholen. Auch diese Produkte sind zur Herstellung von Druckfarben bestimmt.

Diese Produkte haben einen Schmelzpunkt von wenigstens 120 °C (Kapillarmethode) und Viskositäten von 100 bis 600 mPa.s (50% Toluol/20 °C Ubbelohde). Sie können zwar zusätzlich auch noch durch die Calcium- und/oder Zinkverbindungen teilversalzt sein, wodurch nicht nur der Schmelzpunkt erhöht, sondern auch weitere Eigenschaften der Produkte verbessert werden, jedoch ist der Metallanteil nur gering. Die erwähnten Produkte eignen sich als Bindemittel für hochwertige Druckfarben, insbesondere für Toluoltiefdruck. Durch die Salzbildung werden dabei die Lösungsmittelabgabe und die Dispergierfähigkeit in den Tiefdruckfarben günstig beeinflusst. Die Drucke mit solchen Farben haben daher auf den gebräuchlichen Druckpapieren einen guten Stand, hohen Glanz und Farbstärke. Während Rot- und Blaupigmente in den bekannten Druckfarben weitgehend farbton- und lagerstabil bleiben, sind Farben mit verschiedenen Gelbpigmenten ungenügend lagerfähig und zeigen unerwünschte Vergrünungseffekte.

Ferner ist aus der DE-OS 2442 526 die Umsetzung eines carboxylierten Harzes mit einer Verbindung eines Metalls der Gruppe II unter Bildung von entsprechenden Salzen, z.B. Calciumsalzen, bekannt. Hierbei geht man jedoch von Additionsprodukten von Erdölharzen mit ungesättigten, aliphatischen Mono- oder Dicarbonsäure-Verbindungen, z.B. Maleinsäureanhydrid, aus. Diese Produkte sind ebenfalls als Bindemittel für Tiefdruckfarben bestimmt. Hierbei wird jedoch keine Phenolharzkomponente und auch keine Naturharzsäure verwendet.

Die französische Auslegeschrift 2 161 908 beschreibt u.a. die Umsetzung von a) Naturharz, b) bis zu 30, z.B. bis zu 5 %, bezogen auf Naturharz, einer dienophilen Mono- oder Polycarbonsäure oder deren Anhydrid, vorzugsweise Maleinsäureanhydrid, c) einem ungesättigten monomeren Kohlenwasserstoff mit 2 bis 12, vorzugsweise 4 bis 10 C-Atomen und d) Phenolaldehydharz oder dessen Komponenten. Hierbei kann das Reaktionsprodukt durch Umsetzung mit einer Metallverbindung modifiziert werden, z.B. zu Resinaten mit Zink-, Magnesium- oder Calciumverbindungen.

Zwingend ist nach dieser Druckschrift die Umsetzung mit den ungesättigten monomeren Kohlenwasserstoffen. Nach einer Ausführungsform können auch mehrwertige Alkohole als Reaktionskomponente verwendet werden, jedoch wird in allen diesbezüglichen Beispielen als einzige Metallverbindung Zinkoxyd eingesetzt.

Als Phenolharze kommen in der französischen Auslegeschrift 2 161 908 nur Homokondensate in Frage.

Dieses bekannte Verfahren hat sich zwar gut bewährt, doch war es erwünscht, die Produkte hinsichtlich ihrer drucktechnischen Eigenschaften, insbesondere in bezug auf ihre Farbbeständigkeit, noch zu verbessern.

Gegenstand der Erfindung ist nun ein Verfahren zur Herstellung von teilveresterten und mit zweiwertigen Metallverbindungen teilversalzten Umsetzungsprodukten von Naturharzsauren mit ungesättigten Dicarbonsäureeinheiten und weitere Umsetzung mit Verbindungen zweiwertiger Metalle und mehrwertigen Alkoholen unter Salzbildung und Teilveresterung, wobei

a) in erster Stufe die Naturharzsäuren bei 120 bis 250°C, vorzugsweise 150 bis 200°C, mit bis zu 30 Gew.-% an Einheiten einer olefinisch ungesättigten Dicarbonsäure umgesetzt werden,

b) in zweiter Stufe das erhaltene Produkt innerhalb desselben Temperaturbereiches wie unter a) mit einer Metallverbindung umgesetzt wird,

c) in dritter Stufe das so erhaltene Produkt bei 120 bis 200, vorzugsweise 140 bis 200°C, mit einem mehrwertigen Alkohol teilverestert wird,

d) in vierter Stufe das so erhaltene Produkt bei 140 bis 200°, vorzugsweise 160 bis 180°C, mit einem Phenolharz umgesetzt wird, worauf

e) in fünfter Stufe die Umsetzung bei 240 bis 280°, vorzugsweise bei 240 bis 260°C unter gleichzeitiger Vervollständigung der teilweisen Salzbildung und der Teilveresterung weitergeführt wird, bis eine Säurezahl von 20 bis 50 erreicht ist,

das dadurch gekennzeichnet ist, daß Umsetzungsprodukte hergestellt werden, die nicht durch olefinischungesättigte Kohlenwasserstoffe modifiziert sind, wobei in der ersten Stufe a) die Umsetzung mit 3 bis 10, vorzugsweise 4 bis 8 Gewichtsprozent der Dicarbonsäureeinheiten erfolgt,

in der zweiten Stufe b) eine teilweise Neutralisation mit 0,1 bis 2,5, vorzugsweise bis 2 Gewichtsprozent einer Calciumverbindung erfolgt,

in der dritten Stufe c) die Teilveresterung mit 10 bis 16 Gew.-% des mehrwertigen Alkohols durchgeführt wird,

in der vierten Stufe d) mit 5 bis 20, vorzugsweise bis 15, insbesondere 7 bis 12 Gew.-% eines aus Phenol und einem Alkylphenol hergestellten Mischresols oder mit einem Gemisch mindestens eines Alkylphenolresols umgesetzt wird,

wobei die Prozentangaben in a) bis d) jeweils auf die Naturharzsäure bezogen sind.

Die erfindungsgemäss hergestellten Produkte zeichnen sich durch besonders günstige Eigenschaften als Druckfarbenbindemittel, insbesondere für den Toluoltiefdruck aus. So ermöglicht das erfindungsgemässe Verfahren die Herstellung von Produkten, die auch in Gegenwart von Gelbpigmenten beim Lagern stabil bleiben und nicht oder kaum vergrünen. Sie haben im allgemeinen einen Schmelzpunkt von mindestens 125 °C (Kapillarmethode) und eine Viskosität von 100 bis 600, vorzugsweise 200 bis 450 mPa.s (50% Toluol/ 20 °C). Die Viskosität der Produkte kann je nach Art und Menge der Dicarbonsäureeinheiten, der mehrwertigen Alkohole und Resole innerhalb des angegebenen Bereichs schwanken.

Geeignete Naturharzsäuren sind beispielsweise Kolophonium, insbesondere Balsamkolophonium, Wurzelharze, Tallharze, jeweils einzeln oder im Gemisch. Geeignete Dicarbonsäureeinheiten sind Säuren mit bis zu 5 C-Atomen, wie Fumarsäure, Itaconsäure, und insbesondere Maleinsäure und vorzugsweise deren Anhydride. Für die Umsetzung in Stufe b) eignen sich insbesondere Calciumoxyd, aber auch Calciumhydroxyd oder Calciumacetat.

Geeignete mehrwertige Alkohole für die Teilveresterung in Stufe c) sind vorzugsweise drei- oder mehrwertige Alkohole, beispielsweise Glycerin, Trimethyloläthan oder -propan, Pentaerythrit, Dipentaerythrit, jeweils einzeln oder im Gemisch. Diese Alkohole können gegebenenfalls auch im Gemisch mit zweiwertigen Alkoholen, wie Äthandiol, den Propandiolen, Butandiolen, Pentandiolen, oder Hexandiolen eingesetzt werden, wobei jedoch die zweiwertigen Alkohole stets in untergeordneter Menge, das heisst in einem Anteil von höchstens 40 Äquivalent-% vorhanden sind.

In Stufe d) wird zweckmässig ein Mischresol umgesetzt, in dem das Molverhältnis von Phenolen zu Alkylphenolen (0,5 bis 1): (1 bis 0,5), vorzugsweise (0,5 bis 1): 1 und das Molverhältnis der Summe der Phenole und Alkylphenole zu Formaldehyd 1: (1,1 bis 2) beträgt.

Geeignete Phenole für die Mischresole sind beispielsweise Phenol, Diphenylolpropan und -methan. Die Alkylphenole haben im allgemeinen einen geradkettigen oder verzweigten Alkylrest von 1 bis 12, vorzugsweise 1 bis 9 C-Atomen; geeignet sind z.B. die verschiedenen Kresole, p-tert.-Butylphenol, Octylphenol, Nonylphenol, Dodecylphenol.

Es ist auch möglich, die Mischresole erst während der Umsetzung in Stufe d) herzustellen, so dass man von einem Gemisch verschiedener Resole, nämlich einem Phenolresol und einem Alkylphenolresol ausgeht, die erst während der Umsetzung ein Mischresol bilden. In der Regel wird man jedoch ein bereits fertiges Mischresol vorziehen. Dabei kann der von der Kondensation stammende alkalische Katalysator auch im Reaktionsgemisch verbleiben. Es braucht also nicht aus den Resolen ausgewaschen zu werden. Er trägt vielmehr zusammen mit den Calciumverbindungen zur Teilversalzung der Produkte bei.

Die erfindungsgemässen Produkte sind sehr gut in aromatischen Kohlenwasserstoffen, insbesondere in Toluol löslich. Da sie ausserdem Pigmente sehr gut benetzen, eignen sie sich ausgezeichnet als Bindemittel für Toluoltiefdruckfarben. Dabei zeigen sie eine rasche Trocknung, hohen Glanz, hohe Farbstärke und guten Stand auf gestrichenem und nicht gestrichenem Papier. Besonders vorteilhaft ist das Verhalten bei der Lagerung von mit Gelbpigmenten hergestellten Toluoltiefdruckfarben, weil nicht nur deren Viskosität weitgehend unverändert bleibt, sondern diese auch wesentlich geringere Vergrünungstendenzen zeigen als bei Einarbeitung handelsüblicher Resinate.

In den folgenden Beispielen sind - wenn nicht anders angegeben - T jeweils Gewichtsteile und % jeweils Gewichtsprozent. Die Viskositätsangaben beziehen sich stets auf 50%ige Toluollösun-gen/20 °C. Die Schmelzpunkte (Fp) wurden jeweils nach der Kapillarmethode bestimmt. Sz. bedeutet Säurezahl.

## Resole

Es wurden nachstehende Resole eingesetzt

|  | Resol A | Resol B | Resol C | Resol D |
|---|---|---|---|---|
| Viskosität (Ubbelohde/ 20 °C) mPa.s | 2400 | 1500 | 2000 | 1200 |
| Gehalt an freiem formaldehyd % | 2,5 | 2,6 | 3,0 | 2,2 |
| Ausgangsstoffe: |  |  |  |  |
| Phenol T | 576 | 852 | 650 | 700 |
| p-tert.-Butylphenol T | 1800 | 1350 | — | — |
| Octylphenol T | — | — | 720 | — |
| Amylphenol T | — | — | — | 750 |
| Paraformaldehyd T | 930 | 840 | 540 | 648 |
| Wasser T | 56 | 175 | 60 | 60 |
| NaOH, 33%ig T | 150 | 150 | 150 | 150 |
| Xylol | 260 | 240 | 150 | 160 |

## Beispiele

In Stufe a) werden die Naturharzsäuren zusammen mit Maleinsäureanhydrid geschmolzen und eine Stunde auf 180°C erhitzt. Der Ansatz wird mit einer Calciumverbindung versetzt und etwa 10 Minuten bei 180 °C gehalten. Darauf gibt man Glycerin und dann Pentaerythrit zu. Nach Abkühlung auf 160 °C gibt man Resol zu, hält 1 bis 2 Stunden bei dieser Temperatur, erhitzt auf 250 °C und vervollständigt die Teilversalzung und Teilveresterung bei dieser Temperatur, bis die Säurezahl auf höchstens 40 gesunken ist. Nachstehende Tabelle 1 gibt einen Überblick über die Stufen a) bis e).

**Tabelle 1**

| Beispiel | | 1 | 2 | 3 | 4 | 5 | 6 | 7 | 8 | 9 | 10 | 11 |
|---|---|---|---|---|---|---|---|---|---|---|---|---|
| Portug. Kolophonium (Fp 65 °C, Sz 165) | T | 1100 | — | — | — | — | 1000 | — | — | — | — | 1100 |
| Chines. Kolophonium (Fp 60 °C, Sz 165) | T | — | 1150 | — | — | 1150 | 725 | 1000 | 1150 | 1150 | 1150 | — |
| Amerik. Wurzelharz (Fp 62 °C, Sz 162) | T | — | — | 1150 | — | — | — | 725 | — | — | — | — |
| Amerik. Tallharz (Fp 58 °C, Sz 160) | T | — | — | — | 1150 | — | — | — | — | — | — | — |
| Maleinsäureanhydrid | T | 50 | 50 | 50 | 60 | 60 | 78,5 | 90 | 60 | 60 | 50 | 50 |
| CaO | T | 21,5 | 21,5 | 16 | 23 | 21 | 31,5 | 31.5 | 21,5 | 21,5 | 21,5 | 21,5 |
| Glycerin | T | 16 | 16 | 16 | 40 | 18 | 27 | 27 | 20 | 20 | — | — |
| Trimethylolpropan | T | — | — | — | — | — | — | — | — | — | 25 | — |
| Pentaerythrit | T | 140 | 140 | 140 | 125 | 147 | 220 | 220 | 140 | 140 | 140 | 110 |
| Äthylenglykol | T | — | — | — | — | — | — | — | — | — | — | 40 |
| Resol A | T | 132 | — | — | 100 | 138 | 212 | 210 | — | — | 132 | 132 |
| Resol B | T | — | 132 | 132 | — | — | — | — | — | — | — | — |
| Resol C | T | — | — | — | — | — | — | — | 140 | — | — | — |
| Resol D | T | — | — | — | — | — | — | — | — | 140 | — | — |
| Ausbeute | T | 1327 | 1350 | 1370 | 1310 | 1407 | 2110 | 2108 | 1375 | 1382 | 1355 | 1334 |
| Schmelzpunkt °C | | 140 | 142 | 134 | 131 | 138 | 135 | 132 | 139 | 137 | 144 | 133 |
| Säurezahl | | 23 | 24 | 30 | 34 | 34 | 36 | 30 | 26 | 24 | 22 | 25 |
| Viskosität mPa.s | | 380 | 365 | 280 | 310 | 396 | 364 | 340 | 370 | 320 | 350 | 312 |

Wie aus Tabelle 1 ersichtlich, hat sich der Schmelzpunkt gegenüber dem der Ausgangsharzsäuren unter gleichzeitiger Senkung der Säurezahl erhöht.

**Drucktechnische Prüfung**

**A) Herstellung der Druckfarben**

Die erfindungsgemässen Produkte wurden in Toluol gelöst und jeweils mit geeigneten Pigmenten vermischt. Für Rotfarben wurden 20% Rotpigment, für Blaufarben 16% Blaupigment und für Gelbfarben 13% Gelbpigment zugegeben. Jeweils 100 T 50%ige Toluollösungen wurden mit soviel Toluol versetzt, dass eine Auslaufzeit von 17 Sekunden im DIN 4 mm-Becher erhalten wurde.

Als Vergleichsharz wurden zwei für den Toluoltiefdruck handelsübliche Druckfarbenbindemittel C und D eingesetzt. Harz C ist ein mit Maleinsäureanhydrid und Alkylphenol-Phenol-Formaldehyd-Resol modifiziertes Kolophonium, das mit einem mehrwertigen Alkoholteil verestert und mit Zink teilversalzt ist.

Harz D ist ein mit Phenolharz modifiziertes Kolophonium, das mit Calcium und Zink teilversalzt ist, wobei der Zinkanteil gegenüber dem Calciumanteil überwiegt.

**Kennzahlen der Harze:**

Harz C: Fp 140 °C, Sz 32, Viskosität 385 mPa.s.

Harz D: Fp 145 °C, Sz 38, Viskosität 360 mPa.s.

**B) Versuchsergebnisse und Diskussion:**

Die Versuchsergebnisse sind in Tabelle 2 zusammengefasst.

**a) Rotfarben**

Rotfarben - mit Ausnahme der Probe 4 - trocknen zumindest gleich rasch wie die Vergleichsproben. Darüberhinaus zeigen die Farben mit gleich rascher Trocknung jedoch einen höheren Glanz oder erhöhten Stand auf dem Papier.

**b) Blaufarben**

Die für die Rotfarben gemachten Feststellungen gelten auch für Blaufarben. Nur in Probe 1 ist der Stand auf dem Papier schlechter als bei der Vergleichsprobe. Dafür zeigt Probe 1 jedoch eine raschere Trocknung und einen höheren Glanz.

**c) Gelbfarben**

Für die in der Tabelle nicht dargestellten Gelbfarben gelten im wesentlichen dieselben Verhältnisse wie bei den Rotfarben. Allerdings war die Trocknung im Durchschnitt etwa 5 Sekunden länger als bei den Rotfarben. Dagegen waren Glanz und Stand auf dem Papier mit denjenigen der Rotfarben vergleichbar.

Prüfung der Lagerstabilität der Gelbfarben.

Für die Prüfung der Lagerstabilität wurde ein Teil der Gelbfarben zunächst im Kühlschrank, dann 1 Tag bei Raumtemperatur, ein anderer Teil 7 Tage bei 40 °C gelagert. Nach einem Tag Lagerung bei Raumtemperatur wurden die abgekühlt aufbewahrten Farben und die bei 40 °C gelagerten Farben nebeneinander auf gestrichenem Papier mit 12 µm Nassschichtdicke mittels einer Drahtspirale aufgezogen und hinsichtlich der Vergrunungstendenz beurteilt. Ausserdem wurde die Auslaufzeit im DIN 4 mm-Becher bei 25 °C bestimmt.

Die Ergebnisse sind in Tabelle 3 zusammengefasst. Diese Tabelle zeigt, dass die erfindungsgemäss hergestellten Produkte als Bindemittel den gelben Druckfarben nicht nur eine bessere Lagerstabilität, sondern auch eine bessere Farbtonstabilität verleihen.

**Tabelle 2**

| Beispiel | 1 | 2 | 3 | 4 | 5 | 6 | 1 | 4 | 5 | 6 | 7 | Vergleichsharz | |
| | a) Rotfarben | | | | | | b) Blaufarben | | | | | C | D |
|---|---|---|---|---|---|---|---|---|---|---|---|---|---|
| DIN-4mm-Auslaufzeit der Farben/25 °C/s | 16,9 | 17 | 17,2 | 17 | 16,8 | 17 | 17 | 16,8 | 16,9 | 17 | 17 | 16,9 | 17 |
| Trocknung einer 36µm Nassschicht auf gestriche nem Papier/s | 44 | 45 | 47 | 50 | 46 | 44 | 43 | 48 | 44 | 43 | 47 | 46 | 47 |
| Glanz der Auflage | 67 | 69 | 70 | 82 | 72 | 67 | 90 | 85 | 83 | 80 | 78 | 68 | 70 |
| Stand der 6 µm Nassschichtdicke auf gestrichenem Papier/ 60g/m²: | | | | | | | | | | | | | |
| wie Vergl.-Farbe C bzw.D | — | — | — | + | — | + | — | + | + | + | + | + | + |
| besser als Vergl.-Farbe C bzw. D | + | + | + | — | + | — | + | — | — | — | — | | |
| ungünstiger als Vergl.-Farbe C bzw. D | — | — | — | — | — | — | + | — | — | — | — | | |
| DIN-4mm-Auslaufzeit nach 14 Tagen/24 °C/s | 20 | 19 | 21 | 22 | 21 | 22 | 26 | 24 | 28 | 28 | 21 | 22 | |

**Tabelle 3**

| | | | | | Gelbfarben | | | | | | | Vergleichsharz | |
| Beispiel | 1 | 2 | 3 | 4 | 5 | 6 | 7 | 8 | 9 | 10 | 11 | C | D |
|---|---|---|---|---|---|---|---|---|---|---|---|---|---|
| DIN-4mm-Auslaufzeit der Farben 25 °C/s: | | | | | | | | | | | | | |
| n. Herstellung | 16,8 | 17 | 17,1 | 17 | 17 | 16,9 | 17,1 | 17 | 16,8 | 17,3 | 16,7 | 17 | 17,1 |
| n. 40 °C-Lagerung | 22 | 23,6 | 22,9 | 23,8 | 24 | 24,4 | 23,9 | 22,5 | 24,6 | 24,8 | 23,5 | 95 | 102 |
| Vergrünung der Farben: | | | | | | | | | | | | | |
| gering | + | + | + | + | + | + | + | + | + | + | + | — | — |
| stark | — | — | — | — | — | — | — | — | — | — | — | + | + |

**Patentansprüche**

1) Verfahren zur Herstellung von teilveresterten und mit Verbindungen zweiwertiger Metalle teilversalzten Umsetzungsprodukten von Naturharzsäuren durch Umsetzung der Naturharzsäuren mit ungesättigten Dicarbonsäureeinheiten und weitere Umsetzung mit Verbindungen zweiwertiger Metalle und mehrwertigen Alkoholen unter Salzbildung und Teilveresterung, wobei

a) in erster Stufe die Naturharzsäuren bei 120 bis 250°C mit bis zu 30 Gew.-% an Einheiten einer olefinisch ungesättigten Dicarbonsäure umgesetzt werden,

b) in zweiter Stufe das erhaltene Produkt innerhalb desselben Temperaturbereiches wie unter a) mit einer Metallverbindung umgesetzt wird,

c) in dritter Stufe das so erhaltene Produkt bei 120 bis 200°C mit einem mehrwertigen Alkohol teilverestert wird,

d) in vierter Stufe das so erhaltene Produkt bei 140 bis 200°C mit einem Phenolharz umgesetzt wird, worauf

e) in fünfter Stufe die Umsetzung bei 240 bis 280°C unter gleichzeitiger Vervollständigung der teilweisen Salzbildung und der Teilveresterung weitergeführt wird, bis eine Säurezahl von 20 bis 50 erreicht wird, dadurch gekennzeichnet, daß Umsetzungsproduktehergestellt werden, die nicht durch olefinischungesättigte Kohlenwasserstoffe modifiziert sind, wobei

in der erster Stufe a) die Umsetzung mit 3 bis 10 Gewichtsprozent der Dicarbonsäureeinheiten erfolgt,

in der zweiten Stufe b) eine teilweise Neutralisation mit 0,1 bis 2,5 Gewichtsprozent einer Calciumverbindung erfolgt,

in der dritten Stufe c) die Teilveresterung mit 10 bis 16 Gew.-% des mehrwertigen Alkohols durchgeführt wird,

in der vierten Stufe d) mit 5 bis 20 Gew.-% eines aus Phenol und einem Alkylphenol hergestellten Mischresols oder mit einem Gemisch mindestens eines Phenolresols und mindestens eines Alkylphenolresols umgesetzt wird, wobei die Prozentangaben in a) bis d) jeweils auf die Naturharzsäure bezogen sind.

2. Verfahren nach Anspruch 1, dadurch gekennzeichnet, dass die Reaktion in Stufen a) und b) bei 150 bis 200°C, in Stufe c) bei 140 bis 200°C, in Stufe d) bei 160 bis 180°C und in Stufe e) bei 240 bis 260°C durchgeführt wird.

3. Verfahren nach Anspruch 1 oder 2, dadurch gekennzeichnet, dass in Stufe b) der Anteil der Calciumverbindung bis 2 Gew.-%, und in Stufe d) der Anteil des Mischresols bis zu 15 Gew.-%, jeweils bezogen auf die Naturharzsäure, beträgt.

4. Verfahren nach einem oder mehreren der Ansprüche 1 bis 3, dadurch gekennzeichnet, dass in Stufe b) mit Calciumoxyd, Calciumacetat und/ oder Calciumhydroxyd gearbeitet wird.

5. Verfahren nach einem oder mehreren der Ansprüche 1 bis 4, dadurch gekennzeichnet, daß in Stufe d) ein Mischresol umgesetzt wird, in dem das Molverhältnis von Phenolen zu Alkylphenolen (0,5 bis 1): 1 und das Molverhältnis der Summe der Phenole und Alkylphenole zu Formaldehyd 1: (1,1 bis 2) beträgt.

6. Verfahren nach einem oder mehreren der Ansprüche 1 bis 5, dadurch gekennzeichnet, dass in Stufe c) mit mehrwertigem Alkohol verestert wird, wobei der Anteil etwa vorhandener zweiwertiger Alkohole höchstens 40 Äquivalent-% der in dieser Stufe umgesetzten Alkohole ausmacht.

7. Verfahren nach einem oder mehreren der Ansprüche 1 bis 6, dadurch gekennzeichnet, dass das Produkt mit einem Schmelzpunkt von mindestens 125°C (Kapillarmethode) und einer Viskosität von 100 bis 600, vorzugsweise 200 bis 450 mPa.s (50% Toluol/20°C) hergestellt wird.

8. Verwendung der nach einem oder mehreren der Ansprüche 1 bis 7 hergestellten Umsetzungsprodukte als Bindemittel für Druckfarben.

9. Verwendung nach Anspruch 8 als Bindemittel für den Toluoltiefdruck. ·

10. Verwendung nach Anspruch 8 oder 9 für Druckfarben mit Gelbpigmenten.


## Revendications

1 - Procédé de préparation de produits partiellement esterifiés et partiellement salifiés avec des composés de métaux bivalents de produits de réaction d'acides résiniques naturels par réaction des acides résiniques naturels avec des motifs d'acides dicarboxyliques insaturés, et réaction ultérieure avec des composes de metaux bivalents et des polyols, accompagnée d'une salification et d'une estérification partielle, procédé selon lequel:.

a) dans une première étape on fait réagir les acides resiniques naturels, à une température de 120 à 250°C, avec au plus 30 % en poids des motifs d'un acide dicarboxylique éthylénique,

b) dans une deuxième étape on fait réagir le produit obtenu, dans le même intervalle de température que sous a), avec un composé métallique,

c) dans une troisième étape on estérifie partiellement le produit obtenu sous b), à une température comprise entre 120 et 200°C, avec un polyol,

d) dans une quatrième étape on fait réagir le produit obtenu sous c) entre 140 et 200°C avec une resine phénolique, après quoi

e) dans une cinquème étape on poursuit la réaction entre 240 et 280°C de manière à compléter simultanément la salification et l'estérification partielle jusqu'à ce que l'indice d'acide ait atteint une valeur de 20 à 50, procédé caractérisé en ce que:

on obtient des produits de réaction non modifiés par des hydrocarbures éthylenignes et en ce que .

dans la première étape a) on effectue la réaction avec de 3 à 10 % en poids des motifs d'acide dicarboxylique, dans la seconde étape b) on effectue une neutralisation partielle avec de 0,1 à 2,5 % en poids d'un composé du calcium,

dans la troisième étape c) on effectue l'estérification partielle avec de 10 à 16 % en poids du polyol,

dans la quatrième étape d) on fait réagir avec de 5 à 20 % en poids d'un résol mixte préparé à partir d'un phénol et d'un alkylphénol ou avec un mélange d'au moins un résol de phénol et au moins un résol d'alkyl-phénol,

les indications de pourcentages données dans les paragraphes a) à d) étant rapportées à chaque fois à l'acide résinique naturel.

2.- Procédé selon la revendication 1, caractérisé en ce qu'on effectue la réaction, aux étapes a) et b), entre 150 et 200°C, à l'étape c) entre 140 et 200°C, à l'étape d) entre 160 et 180°C et à l'étape e) entre 240 et 260°C.

3.- Procédé selon l'une des revendications 1 et 2, caractérisé en ce que, dans l'étape b), la proportion du composé du calcium peut aller jusqu'à 2 % en poids, et dans l'étape d) la proportion du résol mixte peut aller jusqu'à 15 % en poids, à chaque fois par rapport à l'acide résinique naturel.

4.- Procédé selon une ou plusieurs des revendications 1 à 3, caractérisé en ce qu'on opère, à l'étape b), avec de

6

**0 003 378**

l'oxyde de calcium, de l'acétate de calcium et/ou de l'hydroxyde de calcium.

5.- Procédé selon une ou plusieurs des revendications 1 à 4, caractérisé en ce que, à l'étape d), on fait réagir un résol mixte dans lequel le rapport molaire des phénols aux alkyl-phénols est de (0,5 à 1):1 et le rapport molaire de la somme des phenols et alkylphénols au formaldehyde est de 1:(1,1 à 2).

6.- Procédé selon une ou plusieurs des revendications 1 à 5, caractérisé en ce que, dans l'étape c), on estérifie avec un polyol, la proportion des diols éventuellement présents étant d'au plus 40 % en poids par rapport aux alcools qui réagissent dans cette étape.

7.- Procédé selon une ou plusieurs des revendications 1 à 6, caractérisé en ce qu'on prépare un produit qui fond à au moins 125°C (méthode au capillaire) et a une viscosité de 100 à 600 mPa.s, de préférence 200 à 450 mPa.s (à 50 % dans du toluène, à 20°C).

8.- Utilisation des produits réactionnels qui ont été préparés selon une ou plusieurs des revendications 1 à 7, comme liants pour des encres d'impression.

9.- Utilisation selon la revendication 8 comme liants pour l'héliogravure au toluène.

10.- Utilisation selon l'une des revendications 8 et 9 pour des encres d'impression avec des pigments jaunes.

## Claims

1. A process for the preparation of partial esters and partial salts with divalent metal compounds of reaction products of natural resinic acids by reaction of the natural resinic acids with unsaturated dicarboxylic acid units and further reaction with compounds of divalent metals and polyhydric alcohols under salt formation and partial esterification wherein

a) in a first step the natural resinic acids are reacted between 120 and 250°C with up to 30 % by weight of units of an olefinically unsaturated dicarboxylic acid,

b) in a second step the obtained product is reacted with a metal compound within the same temperature range as under a),

c) in a third step the product obtained in step b) is partially esterified between 120 and 200°C with a polyhydric alcohol,

d) in a fourth step, the product obtained in step c) is reacted between 140 and 200°C with a phenol resin, and subsequently

e) in a fifth step the reaction is continued between 240 and 280°C under simultaneous completion of the salt formation and the partial esterification until an acid number of from 20 to 50 is obtained,

characterized in that reaction products are prepared which are not modified by olefinically unsaturated hydrocarbons and wherein in the first step a) the reaction is performed with from 3 to 10 % by weight of the dicarboxylic acid units, in the second step b) a partial neutralisation is performed with from 0.1 to 2.5 % by weight of a calcium compound,

in the third step c) the partial esterification is performed with from 10 to 16 % by weight of the polyhydric alcohol,

in the fourth step d) reaction is performed with from 5 to 20 % by weight of a co-condensation resol prepared from phenol and an alkylphenol or with a combination of at least one phenolresol and at least on alkylphenol resol,

and wherein the percentages in a) to d) are each referred to the natural resinic acid.

2. A process according to claim 1 wherein the reaction is performed in steps a) and b) between 150 and 200°C, in step c) between 140 and 200°C, in step d) between 160 and 180°C and in step e) between 240 and 260°C.

3. A process according to claim 1 or 2 wherein in step b) the amount of the calcium compound is up to 2 % by weight, and in step d) the amount of the co-condensation resol is up to 15 % by weight, each referred to the natural resinic acid.

4. A process according to one or more of claims 1 to 3 wherein in step b) calcium oxide, calcium acetate or calcium hydroxide or a combination thereof is used.

5. A process according to one or more of claims 1 to 4 wherein in step d) a co-condensation resol is reacted in which the molar ratio of phenols: alkylphenols is (0.5 to 1): 1 and the molar ratio of the total of the phenols and alkylphenols: formaldehyde is 1: (1.1 to 2).

6. A process according to one or more of claims 1 to 5 wherein in step c) esterification is performed with polyhydric alcohols wherein the amount of dihydric alcohol whenever present, is at most 40 equivalent % of the alcohols reacted in this step.

7. A process according to one or more of claims 1 to 6 wherein a product having a melting point of at least 125°C (capillary method) and a viscosity of from 100 to 600, preferably from 200 to 450 mPa.s (50 % toluene/20 °C) is prepared.

8. Application of the reaction products prepared according to one ore more of claims 1 to 7 as a binder for printing inks.

9. Application according to claim 8 as a binder for toluene gravure printing inks.

10. Application according to claim 8 or 9 for printing inks containing yellow pigments.